# EUROPEAN PATENT APPLICATION

(11) **EP 4 725 974 A1**
(43) Date of publication of application: **15.04.2026**
(21) Application number: 24819115.7
(22) Date of filing: 15.05.2024
(51) Int. Cl.: C08G 59/20, C08J 5/04

(54) **THERMOSETTING EPOXY RESIN COMPOSITION AND FIBER-REINFORCED COMPOSITE MATERIAL**

(30) Priority: 06.06.2023 JP 2023093277
(71) Applicant: NAGASE CHEMTEX CORPORATION, Osaka-shi, Osaka 550-8668 (JP)
(72) Inventor: UEDA, Teppei, Tatsuno-shi, Hyogo 679-4124 (JP); UMEKI, Teppei, Tatsuno-shi, Hyogo 679-4124 (JP)
(74) Representative: Keltie LLP
(86) International application number: PCT/JP2024/018042
(87) International publication number: WO 2024/252878

(57) **Abstract**

A thermosetting epoxy resin composition includes a base agent, and a curing agent. The biomass degree of the thermosetting epoxy resin composition is 50% or more. The base agent contains a sorbitol-type epoxy resin. The thermosetting epoxy resin composition is capable of forming a cured product having a glass transition temperature of 90 °C or higher.

## Description

### [Cross Reference to Related Application]

The present disclosure claims priority with respect to the Japanese Patent Application No. 2023-093277 filed on June 6, 2023, and the entire content of the patent application is incorporated herein by reference into the present specification.

### [Technical Field]

The present invention relates to a thermosetting epoxy resin composition, and a fiber-reinforced composite material.

### [Background Art]

Patent Literature 1 proposes a curing agent, comprising: a reaction product of a naturally occurring polyfunctional carboxylic acid, a hydroxyl group-containing solvent, and an epoxidized triglyceride, the curing agent including an ester linkage formed between the hydroxyl group-containing solvent and the naturally occurring polyfunctional carboxylic acid.

### [Citation List]

### [Patent Literature]

Patent Literature 1: Japanese Laid-Open Patent Publication No. 2021-532199

### [Summary of Invention]

### [Technical Problem]

One of the objectives of the present invention is to provide a thermosetting epoxy resin composition and a fiber-reinforced composite material that have a high biomass degree and excellent strength.

### [Solution to Problem]

One aspect of the present disclosure relates to a thermosetting epoxy resin composition, including: a base agent; and a curing agent, wherein a biomass degree of the thermosetting epoxy resin composition is 50% or more, the base agent contains a sorbitol-type epoxy resin, and the thermosetting epoxy resin composition is capable of forming a cured product having a glass transition temperature of 90 °C or higher.

Another aspect of the present disclosure relates to a fiber-reinforced composite material, including: fibers; and a thermosetting epoxy resin composition impregnated into the fibers, wherein the thermosetting epoxy resin composition contains a base agent, and a curing agent, a biomass degree of the thermosetting epoxy resin composition is 50% or more, the base agent contains a sorbitol-type epoxy resin, and the thermosetting epoxy resin composition is capable of forming a cured product having a glass transition temperature of 90 °C or higher.

### [Advantageous Effects of Invention]

A thermosetting epoxy resin composition and a fiber-reinforced composite material that have a high biomass degree and excellent strength is provided.

While the novel features of the invention are set forth particularly in the appended claims, the invention, both as to organization and content, will be better understood and appreciated, along with other objects and features thereof, from the following detailed description taken in conjunction with the drawings.

### [Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, the phrase "a numerical value A to a numerical value B" means to include the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit.

The present disclosure relates to the following.
[1] A thermosetting epoxy resin composition, including:
   a base agent; and a curing agent, wherein
   a biomass degree of the thermosetting epoxy resin composition is 50% or more,
   the base agent contains a sorbitol-type epoxy resin, and
   the thermosetting epoxy resin composition is capable of forming a cured product having a glass transition temperature of 90 °C or higher.
[2] The thermosetting epoxy resin composition according to [1], wherein the biomass degree is 70% or more and 100% or less.
[3] The thermosetting epoxy resin composition according to [1] or [2], wherein the biomass degree is 90% or more and 100% or less.
[4] The thermosetting epoxy resin composition according to any one of [1] to [3], wherein an epoxy equivalent weight of the sorbitol-type epoxy resin is 162 g/eq or more and 200 g/eq or less.
[5] The thermosetting epoxy resin composition according to any one of [1] to [4], wherein an epoxy equivalent weight of the sorbitol-type epoxy resin is 162 g/eq or more and 182 g/eq or less.
[6] The thermosetting epoxy resin composition according to any one of [1] to [5], wherein the curing agent includes at least one of an amine compound and an acid anhydride compound.
[7] The thermosetting epoxy resin composition according to any one of [1] to [6], wherein the amine compound forms a complex with a Lewis acid.
[8] The thermosetting epoxy resin composition according to [7], wherein an activation temperature of the complex is 90 °C or higher.
[9] The thermosetting epoxy resin composition according to [7] or [8], wherein
   the complex is a complex of a tertiary amine having at least one alkyl group having 6 or more carbon atoms, with a Lewis acid, and
   the Lewis acid is a compound of at least one element selected from the group consisting of boron and aluminum.
[10] The thermosetting epoxy resin composition according to any one of [1] to [9], wherein the amine compound is a primary polyamine compound having two or more primary amino groups, and having no ether linkage.
[11] The thermosetting epoxy resin composition according to [10], wherein the primary polyamine compound is at least one selected from the group consisting of an aromatic diamine compound and an alicyclic diamine compound.
[12] The thermosetting epoxy resin composition according to [10], wherein the primary polyamine compound is an aliphatic diamine compound having a branched structure and having a main chain with 6 or more carbon atoms.
[13] The thermosetting epoxy resin composition according to any one of [1] to [12], for use in a fiber-reinforced composite material.
[14] A fiber-reinforced composite material, including:
   fibers; and a thermosetting epoxy resin composition impregnated into the fibers, wherein
   the thermosetting epoxy resin composition includes a base agent, and a curing agent,
   a biomass degree of the thermosetting epoxy resin composition is 50% or more,
   the base agent includes a sorbitol-type epoxy resin, and
   the thermosetting epoxy resin composition is capable of forming a cured product having a glass transition temperature of 90 °C or higher.

### (Thermosetting epoxy resin composition)

The thermosetting epoxy resin composition according to the present disclosure (hereinafter may be referred to as a "resin composition (HB)") includes a base agent and a curing agent, and contains a sorbitol-type epoxy resin as at least part of the base agent. The biomass degree of the sorbitol-type epoxy resin is, for example, 70% or more and 100% or less, or 90% or more and 100% or less, and can be even 99% or more and 100% or less.

By using a sorbitol-type epoxy resin as the major component of the base agent, the biomass degree of the resin composition (HB) as a whole is significantly increased. The biomass degree of the resin composition (HB) is, for example, 70% or more and 100% or less, or 90% or more and 100% or less, and can be 95% or more and 100% or less, or even 99% or more and 100% or less. For example, by setting the proportion of other components except the sorbitol-type epoxy resin to 10 mass% or less, or even 9% or less or 8% or less, the biomass degree of the resin composition (HB) can be easily increased to be 90% or more. The other components except the sorbitol-type epoxy resin are mainly the curing agent, and may contain a small amount of additive.

Note that, in one embodiment of the resin composition (HB), the "base agent" may be rephrased as the "epoxy resin". The "major component" of the base agent refers to a component that accounts for 60 mass% or more, preferably 70 mass% or more, or 90 mass% or more of the base agent (or epoxy resin). In other words, 60 mass% or more, preferably 70 mass% or more, or 90 mass% or more (which may be 100%) of the base agent contained in one embodiment of the resin composition (HB) is a sorbitol-type epoxy resin.

The biomass degree can be measured by a biobased carbon content test for biobased products using radiocarbon measurement, in accordance with ASTM D6866-22 Method B.

The sorbitol-type epoxy resin is an epoxy resin whose backbone is a sorbitol represented by the following structural formula (1):

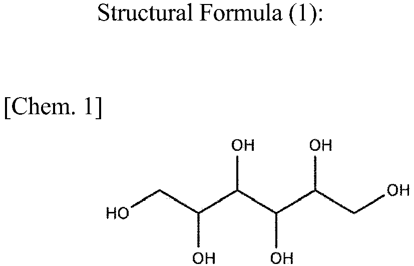

The sorbitol-type epoxy resins can be obtained by, for example, allowing the sorbitol to react with epichlorohydrin, to epoxidize the hydroxyl groups. The following structural formula (2) shows an example of the sorbitol-type epoxy resin in which four hydroxyl groups are epoxidized.

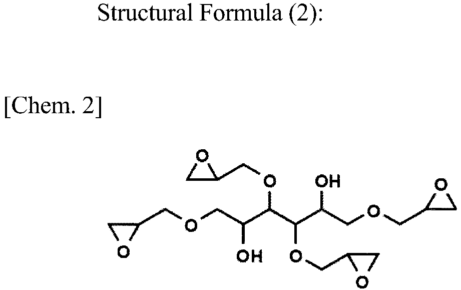

An example of commercially available sorbitol-type epoxy resins is the EX-600 series of "Denacol (Registered Trademark)" manufactured by Nagase ChemteX Corporation. The sorbitol-type epoxy resin preferably has an average of 3.8 to 4.2 (preferably an average of 4.0) epoxy groups (glycidyl ether groups) in its molecule. Such a sorbitol-type epoxy resin is preferred from the viewpoint of realizing a cured product having a high Tg and a high elastic modulus.

In another aspect, the epoxy equivalent weight of the sorbitol-type epoxy resin may be, for example, 162 g/eq or more and 200 g/eq or less. When the epoxy equivalent weight is within the above range, a cured product having a high Tg and a high modulus of elasticity can be realized.

The epoxy equivalent weight of the sorbitol-type epoxy resin is preferably 162 g/eq or more and 182 g/eq or less. The sorbitol-type epoxy resin whose epoxy equivalent weight is within the above range can realize a cured product having a high Tg and a high modulus of elasticity in a balanced manner.

Note that, unlike petroleum-derived epoxy resins having a low biomass degree, sorbitol-type epoxy resins having a high biomass degree are generally poor in heat resistance, with which it is considered difficult to obtain a cured product having a high Tg. However, in reality, sorbitol-type epoxy resins are promising as alternative materials to petroleum-derived epoxy resins. Especially, a sorbitol-type epoxy resin in which approximately four epoxy groups are introduced in its molecule can form a cured product which is excellent in balance of physical properties, such as Tg, elastic modulus, and adhesion to fibers. Furthermore, selecting the type of the curing agent appropriately makes it possible to design the physical properties depending on the desired use.

In the present disclosure, the curing agent is selected so that the resin composition (HB) forms a cured product having a glass transition temperature (Tg) of 90 °C or higher. When the Tg of the cured resin composition (HB) is 90 °C or higher, the cured product can be said to satisfy the generally-required mechanical strength and heat resistance. A cured product of the resin composition (HB) having a Tg of 90 °C or higher is suitable, for example, as a structural material (housing material, case, car body, etc.). The resin composition (HB) whose cured product has a Tg reaching 90 °C or higher is particularly suitable as a material for a fiber-reinforced composite material. The higher the Tg of the cured product of the resin composition (HB) is, the more preferable it is, which may be 100 °C or higher, may be 120 °C or higher, and may be 150 °C or higher.

That the resin composition (HB) is capable of forming a cured product having a glass transition temperature (Tg) of 90 °C or higher means that, for example, when the resin composition (HB) is heated to cure at 140 °C for 3 hours into a cured product, the Tg of the cured product as measured by differential scanning calorimetry (DSC) is 90 °C or higher. The curing conditions for the resin composition (HB) are typically at 140 °C for 3 hours, but are not limited thereto.

The amine compound used as a curing agent may form a complex with a Lewis acid. The bulky complex is less likely to precipitate in the liquid resin composition (HB) and can be dissolved therein. That is, the complex in a stable state in which the unshared electron pair of the amine compound is coordinated to the vacant orbital of the Lewis acid remains dissolved in the liquid resin composition (HB) until the complex reaches a predetermined activation temperature. When the complex in the resin composition (HB) reaches a predetermined activation temperature, the amine compound and the Lewis acid dissociate from each other, allowing the amine compound and the Lewis acid to exert a catalytic effect that promotes the polymerization reaction of the epoxy resin. A complex of an amine compound and a Lewis acid having such properties is suitable as an epoxy resin composition of so-called one-liquid type (in a liquid state in which the base agent and the curing agent are mixed).

The activation temperature of the complex (i.e., the temperature at which the amine compound and the Lewis acid dissociate from each other) may be, for example, 90 °C or higher. The higher the activation temperature is, the more stable the resin composition (HB) is, and the more excellent it is in storage characteristics. In this case, the resin composition (HB) may be a liquid resin composition of one-liquid type.

An amine compound constituting the complex is desirably such that, while having steric hindrance, it can quickly contribute to the reaction after dissociation. Such an amine compound may be, for example, an amine having at least one alkyl group having 6 or more carbon atoms. Examples of such an amine compound include dimethyloctylamine, and di(2-ethylhexyl)amine. In particular, a tertiary amine having at least one alkyl group having 6 or more carbon atoms is preferred from the viewpoint of suppressing the reactivity at room temperature. The alkyl group having 6 or more carbon atoms may be an alkyl group having 6 to 20 carbon atoms, and may be an alkyl group having 6 to 15 carbon atoms. The alkyl group having 6 or more carbon atoms preferably has a branched structure. The amine compound may further have two or less alkyl groups each having 3 or less carbon atoms.

The Lewis acid is not particularly limited, and may be a compound of at least one element selected from the group consisting of boron and aluminum. Specific examples of the boron compound include boron trifluoride, boron trichloride, boron tribromide, and boron triiodide. Specific examples of the aluminum compound include aluminum trifluoride, aluminum trichloride, aluminum tribromide, and aluminum triiodide. Other than the above, silicon tetrafluoride, silicon tetrachloride, silicon tetrabromide, silicon tetraiodide, phosphorus pentafluoride, antimony pentafluoride, and the like can be used.

When a complex of an amine compound and a Lewis acid is used as the curing agent, the amount of the curing agent used may be small. The amount of the complex used per 100 parts by mass of the resin composition (HB) is, for example, 3 parts by mass or more and 20 parts by mass or less, may be 4 parts by mass or more and 17 parts by mass or less, and may be 8 parts by mass or more and 17 parts by mass or less. In this case, the biomass degree of the resin composition (HB) is, for example, 85% or more, and can reach 90% or more, or 95% or more.

Specific examples of the complex include a boron trichloride-dimethyloctylamine complex, a boron trichloride-monomethylamine complex, and a boron trifluoridemonoethylamine complex.

The amine compound may be a primary polyamine compound having two or more primary amino groups. However, from the viewpoint of realizing a higher Tg, it is desirable that the primary polyamine compound has no ether linkage. Hereinafter, the primary polyamine compound having two or more primary amino groups and having no ether linkage may be referred to as a "non-ether primary polyamine". Considering the balance among the viscosity, the stability, and the biomass degree of the resin composition (HB), the molecular weight of the non-ether primary polyamine is, for example, 150 or more and 300 or less, and may be 150 or more and 270 or less.

The non-ether primary polyamine can be, for example, at least one selected from the group consisting of an aromatic diamine compound and an alicyclic diamine compound. An aromatic diamine compound and an alicyclic diamine compound are both suitable for obtaining a cured product with high Tg.

Considering the balance among the viscosity, the biomass degree, and other properties of the resin composition (HB), the aromatic diamine compound preferably has one or two aromatic rings. The aromatic ring may be a benzene ring, and may be a naphthalene ring. The aromatic diamine compound preferably has two or more NH₂ groups per one aromatic or benzene ring, in terms of achieving a higher Tg. The nitrogen atom of the NH₂ group is preferably directly bonded to the aromatic ring. Specifically, as the aromatic diamine compound, 4,4'-methylenebis(2-methylaniline), diethylmethylbenzenediamine, and the like can be used.

The alicyclic diamine compound may be a monocycloamine compound, and may be a bicycloamine compound. The alicyclic diamine compound preferably has two or more NH₂ groups per one alicyclic ring, in terms of achieving a higher Tg. The nitrogen atom of the NH₂ group may be directly bonded to the alicyclic ring, and may be bonded, for example, via an alkylene group such as a methylene group, in the form of a group like a CH₂-NH₂ group. The alicyclic diamine compound is desirably bulky, and preferably has an alkyl group such as a methyl group which is directly bonded to the alicyclic ring. The number of alkyl groups may be 2 or more and 5 or less. Specifically, as the alicyclic diamine compound, 2,2'-dimethyl-4,4'-methylenebis(cyclohexylamine), isophoronediamine, and the like can be used.

Specifically, as the aromatic diamine compound or the alicyclic diamine compound, 4,4'-methylenebis(2-methylaniline), diethylmethylbenzenediamine, 2,2'-dimethyl-4,4'-methylenebis(cyclohexylamine), isophoronediamine, and the like can be used.

Alternatively, the non-ether primary polyamine may be, for example, an aliphatic diamine compound having a branched structure and having a main chain with 6 or more carbon atoms. The number of carbon atoms in the main chain may be 6 or more and 13 or less, and may be 6 or more and 10 or less. The number of carbon atoms in the side chain in the branched structure is the same as or smaller than that in the main chain, and is 1 or more. The number of carbon atoms in the side chain may be, for example, 1 to 3, and may be 1 or 2. More specifically, as such an aliphatic diamine compound, trimethylhexamethylenediamine, and the like can be used.

When a non-ether primary polyamine is used as the curing agent, the amount of the curing agent used may be such that, per 1 epoxy equivalent of the sorbitol-type epoxy resin, the equivalent weight of the hydrogen bonded to the nitrogen atom of the amine compound (hereinafter may be referred to as the "active hydrogen") is, for example, 0.7 equivalents or more and 1.5 equivalents or less, which may be 0.8 equivalents or more and 1.3 equivalents or less, and may be 0.8 equivalents or more and 1.1 equivalents or less. From the viewpoint of increasing the biomass degree of the resin composition (HB), it is preferable to set the equivalent weight of the active hydrogen per 1 epoxy equivalent to 1.1 or less.

The acid anhydride compound that can be used as the curing agent is desirably an acid anhydride having a ring structure. The ring structure may be an aliphatic ring, and may be an aromatic ring. The ring structure may be bonded with a functional group, and may be bonded with an alkyl group. The number of carbon atoms in the alkyl group may be, for example, 1 to 5, may be 1 to 3, and may be 1 or 2. Specific examples include methyltetrahydrophthalic anhydride, methylhexahydrophthalic anhydride, and 5-norbornene-2,3-dicarboxylic anhydride.

The viscosity of the resin composition (HB) measured at a temperature of 25 °C using an E-type viscometer is, for example, 20,000 mPa·s or less, preferably 16,000 mPa·s or less, and a lower viscosity is more preferable. Furthermore, when providing a fiber-reinforced composite material, a higher curing temperature of the resin composition (HB) is more preferable because the impregnation speed into the fibers becomes faster.

However, it is desired that the curing reaction will not proceed excessively rapidly. For example, the time until reaching a doubled viscosity (the time taken for the viscosity to be doubled) at 25 °C is preferably 10 minutes or more, and more preferably 50 minutes or more.

By using the resin composition (HB), a fiber-reinforced composite material having a high biomass degree can be obtained. The fiber-reinforced composite material includes fibers and the resin composition (HB) impregnated into the fibers. To further increase the biomass degree, the biomass degree of the fibers themselves may be set to 50% or more, and may be set to 90% or more. The biomass degree of the fibers themselves may be increased to 99% or more, or even up to 100%. As a result, the biomass degree of the fiber-reinforced composite material can be, for example, 70% or more, 90% or more, or even 99% or more.

Fibers having a high biomass degree are plant-derived fibers, examples of which include hemp, basalt, palm, and bamboo. Other examples thereof include polylactic acid fibers made from lactic acid derived from starch, polytrimethylene terephthalate (PTT) fibers made from 1,3-propanediol derived from starch, aliphatic polyester fibers, such as polyamide fibers, derived from castor oil, and cellulosic fibers, such as regenerated cellulose fibers and cellulose acetate fibers. Plant fibers, such as straw, rush grass, and windmill palm, may also be used. For fibers, without limited to plant-derived fibers, carbon fibers and glass fibers may also be used.

The fiber content in the fiber-reinforced composite material is not particularly limited, and may be, for example, 20 vol% or more and 70 vol% or less, and may be 30 vol% or more and 60 vol% or less.

### [Examples]

The present invention will be more specifically described below with reference to Examples. The present invention, however, is not limited to the following Examples. The component, the role, and the structural formula of the raw materials used are shown in Table A.

**[Table A]**

| component | role | structure |
|---|---|---|
| Sorbitol-type epoxy resin | base resin | 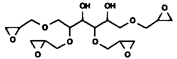 |
| Bisphenol A-type epoxy resin | base resin | 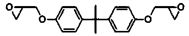 |
| Polyoxypropylenediamine | curing agent | 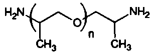 |
| Poly(propylene glycol)diamine | curing agent | 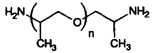 |
| Trimethylolpropane poly(oxypropylene)triamine | curing agent | 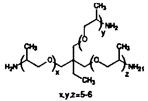 |
| Boron trichloride-dimethyloctylamine complex | curing agent | 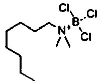 |
| Diethylmethylbenzenediamine (diethyltoluenediamine) | curing agent | 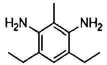 |
| Formaldehyde-2-ethylaniline polycondensate | curing agent | 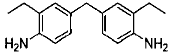 |
| Methyltetrahydrophthalic anhydride | curing agent | 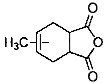 |
| Trimethylhexamethylenediamine | curing agent | 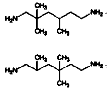 |
| Polyetheramine | curing agent | 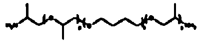 |
| Meta-xylenediamine-modified product | curing agent | 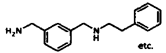 |
| 2,2'-dimethyl-4,4'-methylenebis(cyclohexylamine) | curing agent | 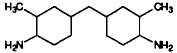 |
| Isophoronediamine | curing agent | 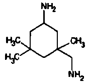 |

### <Example A1>

As the base agent, a sorbitol-type epoxy resin ("GEX-600 series" manufactured by Nagase ChemteX Corporation) represented by the already-mentioned structural formula (2) was used.

As the curing agent, a boron trichloride-dimethyloctylamine complex, which is a complex of an amine compound with a Lewis acid, was used.

To 100 parts by mass of the sorbitol-type epoxy resin (GEX-600 series) serving as the base agent, 4.2 parts by mass of the boron trichloride-dimethyloctylamine complex (curing agent) was blended, and the curing agent was dissolved, to prepare a liquid resin composition (HB) of one-liquid type (hereinafter may be referred to as a "resin composition A1").

### (Viscosity)

The viscosity of the resin composition A1 was measured at 25 °C using an E-type viscometer, which was 15,000 mPa·s.

### (Gel time)

The gel time of the resin composition A1 was measured. The gel time is the time taken for the resin composition A1 to rapidly grow viscous and turns into gel in the intermediate stage of the curing by heating. The gel time was measured using a torque-type gel time tester manufactured by Yasuda Seiki Seisakusho Co., Ltd. Specifically, 2 mL of a sample of the resin composition A1 was placed in a glass tube, and with a glass rod inserted thereinto, the glass tube was placed in an oil bath at 140 °C, and the rotor was rotated, to allow the reaction of the resin composition A1 to proceed, and measure the time taken until a specified torque was applied to the torque detector. The gel time was measured twice for the same sample, and the average value was calculated. The gel time was 17 minutes.

### (Tg)

The resin composition A1 was heated at 140 °C for 3 hours, to obtain a cured product. The Tg of the cured product was measured using DSC, which was 90 °C.

### <Examples A2 and A3, Comparative Examples A1 and A2>

Resin compositions A2 and A3 of Examples A2 and A3 and resin compositions CA1 and CA2 of Comparative Examples A1 and A2 were prepared in the same manner as in Example A1, except that the blending amount of curing agent relative to the base agent was changed to the blending amounts (parts by mass) shown in Table 1, and evaluated in the same manner. The results are shown in Table 1.

### <Reference Example 1>

A resin composition RE1 of Reference Example 1 was prepared in the same manner as in Example A1, except that, instead of the sorbitol-type epoxy resin, a petroleum-derived bisphenol A-type epoxy resin was used as the base agent, and evaluated in the same manner. The results are shown in Table 1.

**[Table 1]**

| composition | biomass degree | A1 | CA1 | CA2 | A2 | A3 | RE1 |
|---|---|---|---|---|---|---|---|
| sorbitol-type epoxy resin | 99.8% | 100 | 100 | 100 | 100 | 100 | |
| bisphenol A-type epoxy resin | 0% | | | | | | 100 |
| boron trichloride-dimethyloctylamine complex | 0% | 4.20 | 1.05 | 2.10 | 8.40 | 16.8 | 4.20 |

| **evaluation item** | **unit** | | | | | | |
|---|---|---|---|---|---|---|---|
| viscosity | mPa·s | 15,000 | | | | | 8,300 |
| gel time | min | 17 | | | | | 7 |
| biomass degree | % | 96 | 99 | 98 | 92 | 85 | 0 |
| Tg | °C | 90 | 50 | 60 | 100 | 110 | 125 |

### <Example B1>

A sorbitol-type epoxy resin ("GEX-600 series" manufactured by Nagase ChemteX Corporation) represented by the already-mentioned structural formula (2) was used as the base agent.

Diethylmethylbenzenediamine (also known as diethyltoluenediamine) was used as the curing agent.

To 100 parts by mass of the first component of a sorbitol-type epoxy resin (GEX-600 series) serving as the base agent, 30.33 parts by mass of diethylmethylbenzenediamine (curing agent) was blended as the second component, to prepare a liquid resin composition (HB) of two-liquid type (hereinafter may be referred to as a "resin composition B1"). The equivalent weight of the active hydrogen per 1 epoxy equivalent (eq/eq ratio) was 1.06.

The viscosity, the gel time, and the Tg were evaluated in the same manner as in Example A1. The result found that the viscosity at 25 °C was 15,500 mPa·s, the gel time at 140 °C was 7.1 minutes, and the Tg was 155 °C.

### <Examples B2 to B7>

Resin compositions B2 to B7 of Examples B2 to B7 were prepared and evaluated in the same manner as in Example B1, except that the blending amount of the curing agent relative to the base agent was changed to the amount (parts by mass) shown in Table 2, and the type of the curing agent was changed in Examples B6 and B7. The results are shown in Table 2.

**[Table 2]**

| composition | biomass degree | B1 | B2 | B3 | B4 | B5 | B6 | B7 |
|---|---|---|---|---|---|---|---|---|
| sorbitol-type epoxy resin | 99.8% | 100 | 100 | 100 | 100 | 100 | 100 | 100 |
| diethylmethylbenzenediamine | 0% | 30.3 | 20.2 | 25.3 | 35.4 | 40.4 | | |
| formaldehyde-2-ethylaniline polycondensate | 0% | | | | | | 40 | |
| methyltetrahydrophthalic anhydride | 0% | | | | | | | 90 |
| dimethylbenzylamine | 0% | | | | | | | 0.1 |
| eq/eq ratio | | 1.06 | 0.70 | 0.88 | 1.23 | 1.41 | 1.00 | 0.99 |

| **evaluation item** | **unit** | | | | | | | |
|---|---|---|---|---|---|---|---|---|
| viscosity | mPa·s | 15,500 | | | | | 28,000 | 1,650 |
| gel time | min | 7.1 | | | | | 4.4 | 3.5 |
| biomass degree | % | 77 | 83 | 80 | 74 | 71 | 71 | 53 |
| Tg | °C | 155 | 90 | 125 | 133 | 120 | 115 | 128 |

### <Examples C1 to C5, Comparative Examples C1 to C5>

Resin compositions C1 to C5 of Examples C1 to C5 and resin compositions CC1 to CC5 of Comparative Examples C1 to C5 were prepared in the same manner as in Example 1B, except that the curing agents shown below were used in the blending amounts (parts by mass) shown in Table 3, and the Tg was evaluated in the same manner. In addition, the stability and the adhesive strength were evaluated. The results are shown in Table 3.

### (Stability)

The resin compositions were left to stand at 25 °C, and the time taken until the viscosity was doubled was measured. The stability until the viscosity is doubled is preferably 10 minutes or more, ideally 50 minutes or more.

### (Adhesive strength)

The tensile shear adhesive strength was measured for evaluation. The resin composition was applied onto an adherend 1, and an adherend 2 was then bonded with the applied resin composition. The adherend used here was an aluminum plate of 1.5 mm thick, 25 mm wide, and 150 mm long, with the surface of the bonding portion polished. This was followed by heating at 140 °C for 3 hours, to cure the resin composition. The tensile shear adhesive strength was measured using a tensile tester (manufactured by Instron Corporation) at a tensile speed of 5 mm/min. When using the resin composition, for example, in a fiber-reinforced composite material, considering the adhesion to fibers, the adhesive strength is preferably 2 MPa or more, ideally 5 MPa or more.

**[Table 3]**

| composition | biomass degree | A1 | B1 | C1 | C2 | CC1 | CC2 | CC3 | C3 | CC4 | CC5 | C4 | C5 |
|---|---|---|---|---|---|---|---|---|---|---|---|---|---|
| sorbitol-type epoxy resin | 99.8% | 100 | 100 | 100 | 100 | 100 | 100 | 100 | 100 | 100 | 100 | 100 | 100 |
| boron trichloride-dimethyloctylamine complex | 0% | 4.2 | | | | | | | | | | | |
| diethylmethylbenzenediamine | 0% | | 30.3 | | | | | | | | | | |
| formaldehyde-2-ethylaniline polycondensate | 0% | | | 40 | | | | | | | | | |
| methyltetrahydrophthalic anhydride | 0% | | | | 90 | | | | | | | | |
| dimethylbenzylamine | 0% | | | | 1 | | | | | | | | |
| polyoxypropylenediamine | 0% | | | | | 35 | | | | | | | |
| poly(propylene glycol)diamine | 0% | | | | | | 70 | | | | | | |
| trimethylolpropane poly(oxypropylene)triamine | 0% | | | | | | | 50 | | | | | |
| trimethylhexamethylenediamine | 0% | | | | | | | | 25 | | | | |
| polyetheramine | 0% | | | | | | | | | 155 | | | |
| meta-xylenediamine-modified product | 0% | | | | | | | | | | 60 | | |
| 2,2'-dimethyl-4,4'-methylenebis(cyclohexylamine) | 0% | | | | | | | | | | | 35 | |
| isophoronediamine | 0% | | | | | | | | | | | | 28 |
| eq/eq ratio | | | 1.06 | 1.00 | 0.99 | 0.97 | 1.02 | 1.03 | 1.04 | 1.00 | 0.97 | 0.97 | 1.02 |

| **evaluation item** | **unit** | | | | | | | | | | | | |
|---|---|---|---|---|---|---|---|---|---|---|---|---|---|
| biomass degree | % | 96 | 77 | 71 | 52 | 74 | 59 | 67 | 80 | 39 | 62 | 74 | 78 |
| stability | min. | >120 | 103 | 73 | 50 | 18 | 38 | 18 | <10 | 75 | 10 | <10 | <10 |
| adhesive strength | MPa | 22 | 10 | 9.0 | 9.5 | 14 | 18 | 11 | 7.5 | 2.8 | 18 | 7.5 | 7.0 |
| Tg | °C | 90 | 155 | 125 | 120 | 65 | 35 | 73 | 100 | 5 | 60 | 140 | 140 |

### [Industrial Applicability]

The thermosetting epoxy resin composition according to the present disclosure has a high biomass degree, and is suitable for use in a fiber-reinforced composite material.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

## Claims

1. A thermosetting epoxy resin composition, comprising:
a base agent; and a curing agent, wherein
a biomass degree of the thermosetting epoxy resin composition is 50% or more,
the base agent contains a sorbitol-type epoxy resin, and
the thermosetting epoxy resin composition is capable of forming a cured product having a glass transition temperature of 90 °C or higher.

2. The thermosetting epoxy resin composition according to claim 1, wherein the biomass degree is 70% or more and 100% or less.

3. The thermosetting epoxy resin composition according to claim 1, wherein the biomass degree is 90% or more and 100% or less.

4. The thermosetting epoxy resin composition according to claim 1, wherein an epoxy equivalent weight of the sorbitol-type epoxy resin is 162 g/eq or more and 200 g/eq or less.

5. The thermosetting epoxy resin composition according to claim 1, wherein an epoxy equivalent weight of the sorbitol-type epoxy resin is 162 g/eq or more and 182 g/eq or less.

6. The thermosetting epoxy resin composition of claim 1, wherein the curing agent includes at least one of an amine compound and an acid anhydride compound.

7. The thermosetting epoxy resin composition of claim 1, wherein the amine compound forms a complex with a Lewis acid.

8. The thermosetting epoxy resin composition of claim 7, wherein an activation temperature of the complex is 90 °C or higher.

9. The thermosetting epoxy resin composition of claim 7 or 8, wherein
the complex is a complex of a tertiary amine having at least one alkyl group having 6 or more carbon atoms, with a Lewis acid, and
the Lewis acid is a compound of at least one element selected from the group consisting of boron and aluminum.

10. The thermosetting epoxy resin composition of claim 1, wherein the amine compound is a primary polyamine compound having two or more primary amino groups, and having no ether linkage.

11. The thermosetting epoxy resin composition of claim 10, wherein the primary polyamine compound is at least one selected from the group consisting of an aromatic diamine compound and an alicyclic diamine compounds.

12. The thermosetting epoxy resin composition according to claim 10, wherein the primary polyamine compound is an aliphatic diamine compound having a branched structure and having a main chain with 6 or more carbon atoms.

13. The thermosetting epoxy resin composition according to any one of claims 1 to 12, for use in a fiber-reinforced composite material.

14. A fiber-reinforced composite material, comprising:
fibers; and a thermosetting epoxy resin composition impregnated into the fibers, wherein
the thermosetting epoxy resin composition contains a base agent, and a curing agent,
a biomass degree of the thermosetting epoxy resin composition is 50% or more,
the base agent contains a sorbitol-type epoxy resin, and
the thermosetting epoxy resin composition is capable of forming a cured product having a glass transition temperature of 90 °C or higher.
